# EUROPEAN PATENT SPECIFICATION

(11) **EP 2 264 483 B1**
(45) Date of publication and mention of the grant of the patent: **29.11.2017**
(21) Application number: 10163199.2
(22) Date of filing: 19.05.2010
(51) Int. Cl.: G01S 15/89, G06T 7/20, G01S 7/52

(54) **Ultrasound system and method for providing a motion vector**
Ultraschallsystem und Verfahren zur Bereitstellung eines Bewegungsvektors
Système à ultrasons et procédé pour fournir un vecteur de mouvement

(30) Priority: 01.06.2009 KR 20090048206; 06.05.2010 KR 20100042290
(43) Date of publication of application: 22.12.2010
(73) Proprietor: Samsung Medison Co., Ltd., Hongcheon-gun, Gangwon-do 25108 (KR)
(72) Inventor: Lee, Hyeong Do, Seoul 135-851 (KR); Kim, Jeong Sik, Seoul 135-851 (KR)
(74) Representative: Schmid, Wolfgang

(56) References cited:
- EP-A1- 1 977 694
- JP-A- 2002 191 600
- US-A- 5 010 528
- US-A- 5 555 886

## Description

### TECHNICAL FIELD

The present disclosure relates to ultrasound systems, and more particularly to an ultrasound system and method of providing a motion vector, which comprises the speed and direction of movement of a moving object of interest.

### BACKGROUND

Due to its non-invasive and non-destructive nature, an ultrasound system has been extensively used in the medical field to acquire internal information of a target object. The ultrasound system is used in the medical field since it can provide doctors with a high resolution image of internal tissues of the target object without the need of surgical treatment.

As is known in the art, the ultrasound system may function in various modes including a brightness mode (B-mode) wherein reflection coefficients of the ultrasound signal reflected by the target object may be visualized, a Doppler mode (D-mode) wherein speed information of a moving target object (especially bloodstream) may be acquired by using the Doppler effect, and an elastic mode (E-mode) wherein mechanical characteristics of tissues may be visualized based on strains representing deformation of the tissues due to the application of the stress.

The Doppler mode is based on a Doppler frequency, which is the difference between the frequency of the transmitted ultrasound signal from an ultrasound probe ("transmission frequency") and the frequency of the echo signal reflected from the moving target object and received through the ultrasound probe ("reception frequency"). The Doppler frequency varies according to the angle ("Doppler angle") between an ultrasound beam consisting of a group of ultrasound signals and the reflecting object (i.e., bloodstream). For example, assuming that the reflecting object is moving at a speed of 1m/s and the transmission frequency is 5MHz, the reception frequency would be 6.5MHz when the Doppler angle is 0° and 0MHz when the Doppler angle is 90°.
As such, the speed of the bloodstream cannot be estimated if the Doppler angle is 90°. Further, for a convex probe, the bloodstream may be displayed as moving in the direction opposite to its actual direction depending on the angle of the ultrasound beam.

To solve the above problems, a method of using two ultrasound beams or speckle information has been proposed to detect the speed of the bloodstream having the Doppler angle of 90°. However, such a method is not practical since the performance is not stable or the frame rate is too low to allow for real time display.

In the US 5 555 886 A an ultrasonic diagnostic system is provided that automatically measures a volumetric flow rate of a vessel presented on a graphical display by estimating the vessel size and direction. The Doppler information signals received from an ultrasonic transducer include frequency components representing fluid flow through a region of interest. The operator selects a vessel represented graphically on the display in which a volumetric flow rate measurement is desired. The ultrasonic diagnostic system then performs a search in a plurality of directions that extend radially outward from a location within the vessel for an upper and a lower set of edge points that correspond to inner wall surfaces of the vessel. Once the upper and lower set of edge points are identified, curves are fitted through the respective sets of edge points to define respective estimates of the inner wall surfaces. Next, an angular difference between the respective curves and a beam direction of the Doppler information signals is measured. Finally, a volumetric flow rate measurement of the selected vessel can be derived within a region defined by the respective curves and based on the measured angular difference.

### SUMMARY

According to the present disclosure, there is disclosed an ultrasound system and method for providing a motion vector of a moving object of interest (e.g., bloodstream) by using a color Doppler mode image and ultrasound data comprising speed information of the object of interest.

According to an aspect of the present disclosure, a method of providing a motion vector on an ultrasound image comprises the features of claim 1.

According to another aspect of the present disclosure, a system for providing a motion vector on an ultrasound image comprises the features of claim 5.

The ultrasound system and method according to the present disclosure can provide a motion vector comprising a speed and direction of movement of a moving object of interest (e.g., bloodstream) without lowering the frame rate. Thus, it can accurately provide a user with the direction of movement of the moving object of interest.

### BRIEF DESCRIPTION OF THE DRAWINGS

- Figure 1: illustrates a block diagram showing an arrangement of an ultrasound system according to an embodiment of the present disclosure.
- Figure 2: illustrates a block diagram showing an arrangement of an ultrasound data acquisition unit according to an embodiment of the present disclosure.
- Figure 3: illustrates a schematic diagram showing transducer elements, scanlines and coordinate system according to an embodiment of the present disclosure.
- Figure 4: illustrates a block diagram showing an arrangement of a processor according to an embodiment of the present disclosure.
- Figure 5: illustrates a diagram showing a B-mode image, a Doppler mode image, a region of interest and a bloodstream according to an embodiment of the present disclosure.
- Figure 6: illustrates a diagram showing lines and intersects according to an embodiment of the present disclosure.
- Figure 7: illustrates a diagram showing an area including 5x5 pixels according to an embodiment of the present disclosure.
- Figure 8: illustrates a diagram showing a motion vector formed according to an embodiment of the present disclosure.
- Figure 9a: illustrates an enlarged view of portion A shown in Figure 8.
- Figure 9b: illustrates an enlarged view of portion B shown in Figure 8.

### DETAILED DESCRIPTION

Embodiments of the present disclosure are described below with reference to the accompanying drawings. As used herein, the term "Doppler mode" comprises a color Doppler mode, while a target object comprises a moving object of interest (e.g., bloodstream).

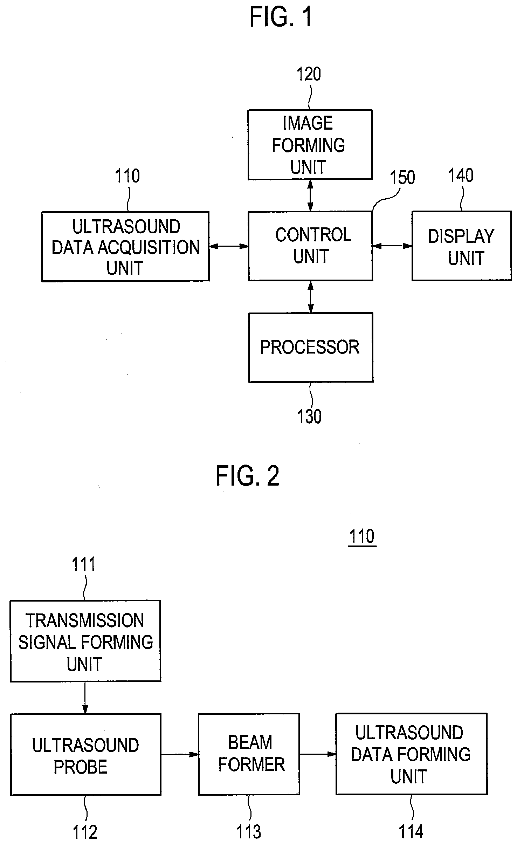

Figure 1 illustrates a block diagram showing an arrangement of an ultrasound system according to an embodiment of the present disclosure. The ultrasound system comprises an ultrasound data acquisition unit 110, an image forming unit 120, a processor 130, a display unit 140 and may comprise a control unit 150. The ultrasound system may further comprise a user input unit (not shown), which is configured to receive from a user setting information on a region of interest (ROI) (i.e., color box) for acquiring a Doppler mode image of the object of interest. The user input unit may comprise a control panel, a mouse, a keyboard and the like. In this embodiment, the setting information of the region of interest may include the size and location of the region of interest within a brightness mode (B-mode) image.

The ultrasound data acquisition unit 110 transmits an ultrasound signal to a target object and receive the ultrasound signal reflected by the target object (i.e., ultrasound echo signal), thereby acquiring ultrasound data corresponding to scanlines of the region of interest within the B-mode image.

Figure 2 illustrates a block diagram showing an arrangement of the ultrasound data acquisition unit 110 according to an embodiment of the present disclosure. The ultrasound data acquisition unit 110 may comprise a transmission signal forming unit 111, an ultrasound probe 112 including multiple transducer elements, a beam former 113 and an ultrasound data forming unit 114.

The transmission signal forming unit 111 may form transmission signals, which will be applied to the ultrasound probe 112 for acquiring a Doppler mode image in consideration of the focal points and locations of the transducer elements of the ultrasound probe 112.

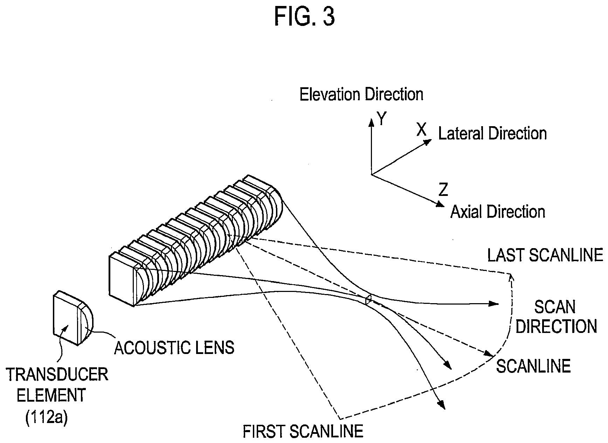

The ultrasound probe 112 may convert the transmission signals provided from the transmission signal forming unit 111 into ultrasound signals, transmit the ultrasound signals to the target object, and receive the ultrasound echo signals reflected by the target object to thereby form reception signals. The ultrasound probe 112 may comprise multiple transducer elements 112a configured to perform inter-conversion between an ultrasound signal and an electrical signal, as shown in Figure 3. A group of ultrasound signals transmitted from the multiple transducer elements 112a are formed into ultrasound beams, and then transmitted to the target object along the respective multiple scanlines, as shown in Figure 3. Figure 3 shows the lateral direction perpendicular to the axial direction and the elevation direction which is the thickness direction in cross section of the target object.

The beam former 113 may perform analog-to-digital conversion of the reception signals provided by the ultrasound probe 112. The beam former 113 may form receive-focused signals by receive-focusing the digital-converted reception signals in consideration of the focal points and locations of the transducer elements of the ultrasound probe 112.

The ultrasound data forming unit 114 may form ultrasound data corresponding to each of the multiple scanlines using the receive-focused signals provided by the beam former 113. The ultrasound data comprises speed information of the object of interest. The ultrasound data forming unit 114 may further perform multiple signal processing (e.g., gain control, filtering, etc.) to form a Doppler mode image.

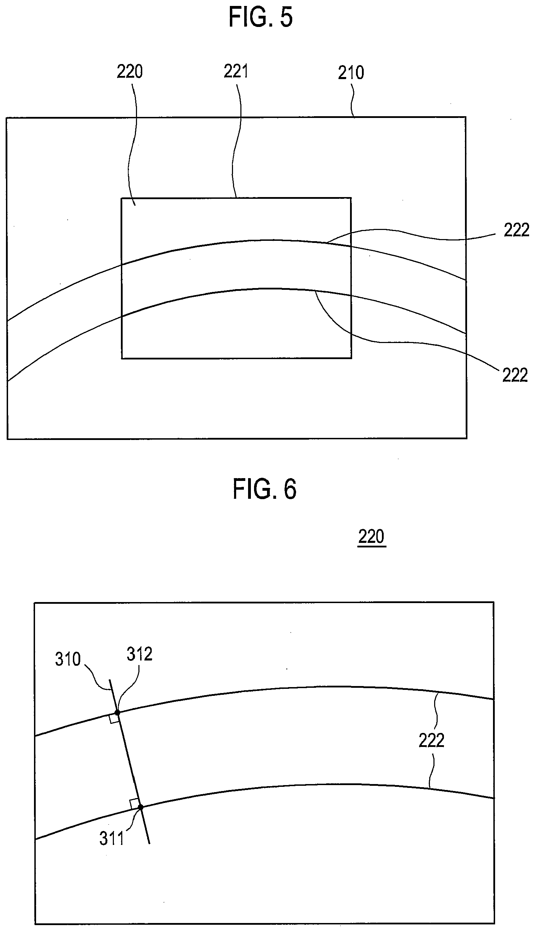

Referring back to Figure 1, the image forming unit 120 forms a Doppler mode image 220, in which the speed of the object of interest (e.g., bloodstream) approaching the ultrasound probe 112 and the speed of the object of interest receding from the ultrasound probe 112 are represented in different colors, as shown in Figure 5. In
Figure 5, reference numerals 210, 221 and 222 represent the B-mode image, the region of interest and the blood vessel, respectively.
The processor 130 sets a motion vector, which comprises the speed and direction of movement of the object of interest, by using the ultrasound data provided by the ultrasound data acquisition unit 110 and the Doppler mode image provided by the image forming unit 120.

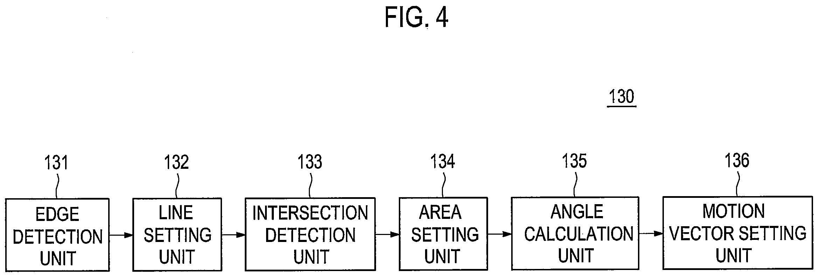

Figure 4 illustrates a block diagram showing an arrangement of a processor 130 according to an embodiment of the present disclosure. The processor 130 comprises an edge detection unit 131, a line setting unit 132, an intersection detection unit 133, an area setting unit 134, an angle calculation unit 135 and a motion vector setting unit 136. The edge detection unit 131 detects an edge (i.e., blood vessel 222) by analyzing the Doppler mode image 220 provided by the image forming unit 120. The edge may be detected based on the brightness changes and using differential operators. In this embodiment, the edge may be detected by using an edge mask such as Sobel, Prewitt, Robert, Canny mask, etc. Alternatively, the edge may be detected based on the differences between eigenvalues and using structure tensors.
The line setting unit 132 sets lines perpendicular to the edge (i.e., blood vessel) detected by the edge detection unit 131. As an example, the line setting unit 132 may set a line 310, which is perpendicular to the edge (i.e., blood vessel 222), as described in Figure 6.

The intersection detection unit 133 detects first and second intersections 311 and 312, each of which is the intersection of the edge (i.e., blood vessel 222) and the line set by the line setting unit 132.

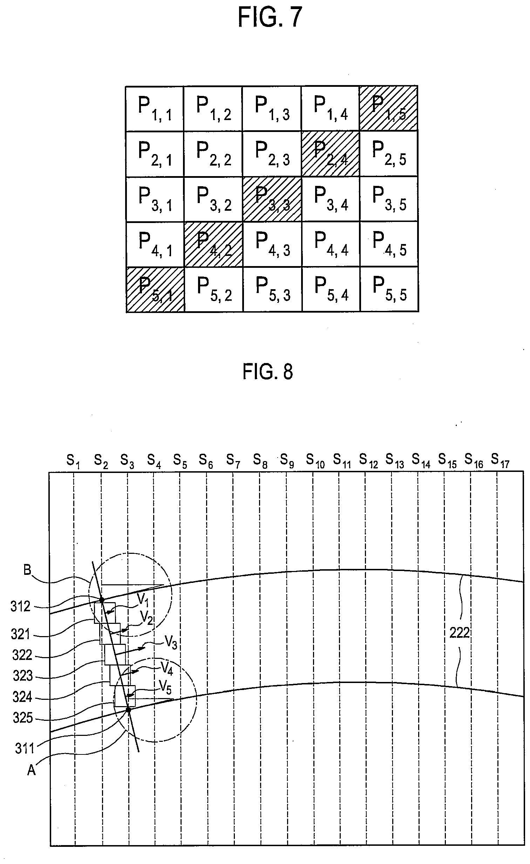

The area setting unit 134 sets first areas including pre-defined number of pixels, wherein each of the first areas is centered at the intersections detected by the intersection detection unit 133. As an example, the area setting unit 134 may set a first area, which includes 5x5 pixels and is centered at the first intersection P_{3,3} 311 as described in Figure 7. In Figure 7, shaded pixels P_{1, 5}, P₂, _{4,} P_{3, 3,} P_{4, 2,} P_{5, 1} represent the edge. The area setting unit 134 may also set a first area for the second intersection 312, which includes 5x5 pixels and is centered at the second intersection 312 as described above.

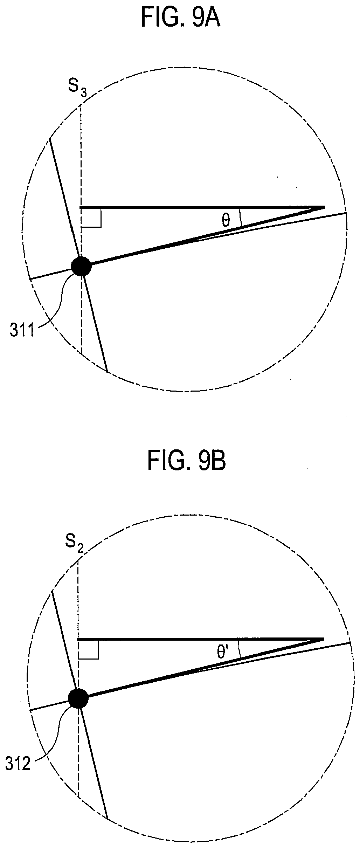

The angle calculation unit 135 detects pixels corresponding to the edge for each of the first and second intersections 311 and 312, and calculate angles of edges at each of the first and second intersections 311 and 312 by using the detected pixels. As an example, the angle calculation unit 135 may detect pixels P_{1, 5}, P_{2, 4}, P_{3, 3}, P_{4, 2}, P_{5, 1} corresponding to the edge for the first intersection 311 within the area including 5x5 pixels, as shown in Figure 7. The angle calculation unit 135 may calculate the angle θ of the edge at the first intersection 311 by using the left-most pixel P_{5, 1} and the rightmost pixel P_{1, 5} among the detected pixels, as shown in Figure 9a. The methods of calculating the angle of the edge are well known in the art. Thus, they have not been described in detail so as not to unnecessarily obscure the present disclosure. Similarly, the angle calculation unit 135 may also calculate the angle θ' for the second intersection 312, as shown in Figure 9b.

The motion vector setting unit 136 forms a motion vector, which includes a speed and direction of movement of the object of interest, by using ultrasound data provided by the ultrasound data acquisition unit 110 and the angle calculated by the angle calculation unit 135. The motion vector setting unit 136 then sets the motion vector on the Doppler mode image.

In particular, the motion vector setting unit 136 may set a plurality of second areas 321-325 on the line segment demarcated by the first intersection 311 and the second intersection 312 on the line 310, as shown in Figure 8. Each of the second areas 321-325 may have a predetermined size (e.g., 5x5), and the center of each of the second areas 321-325 may be located on the line 310. In one embodiment, the second areas 321-325 may be set in an overlapping manner. Although the foregoing embodiment has been described to set the five second areas 321-325 on the line 310, the present disclosure is not limited thereto.

In one embodiment, the motion vector setting unit 136 may obtain object-of-interest information corresponding to each of the second areas 321-325 by using the ultrasound data for the scanline corresponding to the respective second area. The object-of-interest information comprises the size (speed) and direction of movement of the moving object of interest (e.g., bloodstream). In another embodiment, the motion vector setting unit 136 may obtain object-of-interest information by using the ultrasound data for the scanline most adjacent the respective second area.

The motion vector setting unit 136 may calculate an average speed in each of the second areas 321-325 by using the respectively obtained object-of-interest information. The motion vector setting unit 136 may form motion vectors V₁-V₅ for the second areas 321-325 based on the calculated average speeds and the angle of the edge calculated by the angle calculation unit 135, and may set the formed motion vectors V₁-V₅ on the Doppler mode image 220.

Referring back to Figure 1, the display unit 140 displays the Doppler mode image 220 and the motion vectors V₁-V₅.

The control unit 150 may control the transmission and receiving of the ultrasound signals, and control the formation of the ultrasound data. The control unit 150 may also control the formation and display of the Doppler mode image, and control the formation and display of the vectors.

As an example, while only one line 310 perpendicular to the edge (i.e., blood vessel 222) and second areas on the line 310 are used to form a motion vector of the object of interest in the foregoing embodiments, at least two different lines perpendicular to the edge (i.e., blood vessel 222) at different locations and second areas on the at least two different lines may be used to form the motion vector of the object of interest in other embodiments.

## Claims

1. A method of providing a motion vector on an ultrasound image, comprising:
acquiring a brightness mode, B-mode, image of a target object including a blood vessel (222), through which a moving object flows;
enabling a region of interest, ROI, to be set in the B-mode image, the ROI covering the blood vessel (222) in the target object;
acquiring ultrasound data for a portion of the target object corresponding to the ROI, the ultrasound data including speed information of the moving object;
forming a color Doppler mode image (220) of the portion based on the ultrasound data;
detecting an edge of the blood vessel (222) based on the color Doppler mode image (220);
setting at least one line (310) perpendicular to the edge;
detecting at least one intersection (311,312) of the at least one line (310) and the edge;
setting a first area including a predetermined number of pixels to be centered at the at least one intersection (311,312);
calculating an angle of the edge at the intersection (311,312) based on pixels corresponding to the edge in the first area; and
forming a motion vector of the moving object based on the ultrasound data and the angle of the edge;
setting the motion vector on the color Doppler mode image (220); and
displaying the color Doppler mode image (220) with the motion vector set.

2. The method of Claim 1, wherein calculating an angle comprises calculating the angle by using a left-most pixel and a right most pixel among the detected pixels.

3. The method of Claim 1, wherein forming the motion vector based on the ultrasound data and the angle comprises:
setting a plurality of second areas (321-325) on a line segment demarcated by the at least one intersection (311,312) on the at least one line (310);
obtaining object-of-interest information for each of the plurality of second areas (321-325) based at least in part on the ultrasound data for a scanline corresponding to the respective second area (321-325);
calculating an average speed in each of the plurality of second areas (321-325) based on the respectively obtained object-of-interest information;
forming the motion vector for each of the plurality of second areas (321-325) based on the respective average speed and the angle of the edge.

4. The method of Claim 3, wherein the object-of-interest information comprises a speed and direction of movement of the object of interest.

5. A system of providing a motion vector on an ultrasound image, comprising:
an image acquisition unit configured to acquire a brightness mode, B-mode, image of a target object including a blood vessel (222), through which a moving object flows;
a region setting unit configured to enable a region of interest, ROI, to be set in the B-mode image, the ROI covering the blood vessel (222) in the target object;
an ultrasound data acquisition unit (110) configured to acquire ultrasound data for a portion of the target object corresponding to the ROI, the ultrasound data including speed information of the moving object;
an image forming unit (120) configured to form a color Doppler mode image (220) of the portion based on the ultrasound data;
a processor (130) configured to detect an edge of the blood vessel (222) based on the color Doppler mode image (220), set at least one line (310) perpendicular to the edge, detect at least one intersection (311,312) of the at least one line (310) and the edge, set a first area including a predetermined number of pixels to be centered at the at least one intersection, calculate an angle of the edge at the intersection (311,312) based on pixels corresponding to the edge in the first area, form a motion vector of the moving object based on the ultrasound data and the angle of the edge, and to set the motion vector on the color Doppler mode image (220); and
a display unit (140) configured to display the color Doppler mode image (220) with the motion vector set.

6. The system of Claim 5, wherein the processor (130) is configured to calculate the angle by using a left-most pixel and a right most pixel among the detected pixels.

7. The system of Claim 5, wherein the processor (130) configured to set a plurality of second areas (321-325) on a line segment demarcated by the at least one intersection (311,312) on the at least one line (310), obtain object-of-interest information for each of the plurality of second areas (321-325) based at least in part on the ultrasound data for a scanline corresponding to the respective second area (321-325), calculate an average speed in each of the plurality of second areas (321-325) based on the respectively obtained object-of-interest information, and form the motion vector for each of the plurality of second areas (321-325) based on the respective average speed and the angle of the edge.

8. The system of Claim 7, wherein the object-of-interest information comprises a speed and direction of movement of the object of interest.

## Patentansprüche

1. Verfahren zum Erzeugen eines Bewegungsvektors an einem Ultraschallbild, welches Folgendes aufweist:
Erlangen eines Helligkeitsmodus-B-Modus-Bilds eines Zielobjekts, einschließlich eines Blutgefäßes (222), durch das ein sich bewegendes Objekt strömt;
Ermöglichen, dass ein interessierender Bereich, ROI, in dem B-Modus-Bild festgelegt wird, wobei der ROI das Blutgefäß (222) in dem Zielobjekt abdeckt;
Erlangen von Ultraschalldaten für einen Abschnitt des Zielobjekts, der dem ROI entspricht, wobei die Ultraschalldaten Geschwindigkeitsinformationen des sich bewegenden Objekts beinhalten;
Erzeugen eines Farb-Doppler-Modus-Bilds (220) des Abschnitts basierend auf den Ultraschalldaten;
Detektieren eines Rands des Blutgefäßes (222) basierend auf dem Farb-Doppler-Modus-Bild (220);
Festlegen wenigstens einer Linie (310) senkrecht zu dem Rand;
Detektieren wenigstens eines Schnittpunkts (311,312) der wenigstens einen Linie (310) und des Rands;
Festlegen einer ersten Fläche, die eine bestimmte Anzahl an Pixeln enthält, die an dem wenigstens einen Schnittpunkt (311,312) zentriert werden sollen;
Berechnen eines Winkels des Rands an dem Schnittpunkt (311,312) basierend auf Pixeln, die dem Rand in der ersten Fläche entsprechen; und
Bilden eines Bewegungsvektors des sich bewegenden Objekts basierend auf den Ultraschalldaten und dem Winkel des Rands;
Festlegen des Bewegungsvektors auf dem Farb-Doppler-Modus-Bild (220); und
Anzeigen des Farb-Doppler-Modus-Bilds (220) mit dem festgelegten Bewegungsvekator.

2. Verfahren nach Anspruch 1, wobei das Berechnen eines Winkels das Berechnen des Winkels durch Verwenden eines am weitesten links gelegenen Pixels und eines am weitesten rechts gelegenen Pixels unter den ermittelten Pixeln beinhaltet.

3. Verfahren nach Anspruch 1, wobei das Bilden des Bewegungsvektors basierend auf den Ultraschalldaten und dem Winkel Folgendes aufweist:
Festlegen einer Vielzahl von zweiten Flächen (321-325) auf einem Liniensegment, das durch wenigstens einen Schnittpunkt (311,312) auf der wenigstens einen Linie (310) abgegrenzt ist;
Erlangen von Informationen des interessierenden Objekts für jede der Vielzahl von zweiten Flächen (321-325) basierend zumindest teilweise auf den Ultraschalldaten für eine Scanlinie, die der jeweiligen zweiten Fläche (321-325) entspricht;
Berechnen einer durchschnittlichen Geschwindigkeit in jeder der Vielzahl von zweiten Flächen (321-325) basierend auf den jeweils erlangten Informationen zu dem interessierenden Objekt;
Bilden des Bewegungsvektors für jede der Vielzahl von zweiten Flächen (321-325) basierend auf der jeweiligen durchschnittlichen Geschwindigkeit und dem Winkel des Rands.

4. Verfahren nach Anspruch 3, wobei die Information des interessierenden Objekts eine Geschwindigkeit und eine Richtung der Bewegung des interessierenden Objekts beinhaltet.

5. System zum Erzeugen eines Bewegungsvektors auf einem Ultraschallbild, welches Folgendes aufweist:
eine Bilderlangungseinheit, die dafür vorgesehen ist, ein Helligkeitsmodus-B-Modus-Bild eines Zielobjekts einschließlich eines Blutgefäßes (222), durch das ein sich bewegendes Objekt strömt, zu erlangen;
eine Bereichsfestlegungseinheit, die dafür vorgesehen ist, es einem interessierenden Bereich, ROI, zu erlauben, in dem B-Modus-Bild festgelegt zu werden, wobei der ROI das Blutgefäß (222) in dem Zielobjekt abdeckt;
eine Ultraschalldatenerlangungseinheit (110), die dafür vorgesehen ist, Ultraschalldaten für einen Abschnitt des Zielobjekts, der dem ROI entspricht, zu erlangen, wobei die Ultraschalldaten Geschwindigkeitsinformationen des sich bewegenden Objekts beinhalten;
eine Bilderzeugungseinheit (120), die dafür vorgesehen ist, ein Farb-Doppler-Modus-Bild (220) des Abschnitts basierend auf den Ultraschalldaten zu erzeugen;
einen Prozessor (130), der dafür vorgesehen ist, einen Rand des Blutgefäßes (222) basierend auf dem Farb-Doppler-Modus-Bild (220) zu detektieren, wenigstens eine Linie (310) senkrecht zu dem Rand festzulegen, wenigstens einen Schnittpunkt (311,312) der wenigstens einen Linie (310) und des Rands zu detektieren, eine erste Fläche, die eine bestimmte Anzahl an Pixeln entfällt, die an dem wenigstens einen Schnittpunkt zentriert werden sollen, festzulegen, einen Winkel des Rands an dem Schnittpunkt (311,312) basierend auf Pixeln, die dem Rand in der ersten Fläche entsprechen, zu berechnen, einen Bewegungsvektor des sich bewegenden Objekts basierend auf den Ultraschalldaten und
dem Winkel des Rands zu bilden, und den Bewegungsvektor auf dem Farb-Doppler-Modus-Bild (220) festzulegen; und
eine Anzeigeeinheit (140), die dafür vorgesehen ist, das Farb-Doppler-Modus-Bild (220) mit dem festgelegten Bewegungsvektor anzuzeigen.

6. System nach Anspruch 5, wobei der Prozessor (130) dafür vorgesehen ist, den Winkel durch Verwenden eines am weitesten links gelegenen Pixels und eines am weitesten rechts gelegenen Pixels unter den detektierten Pixeln zu berechnen.

7. System nach Anspruch 5, wobei der Prozessor (130) dafür vorgesehen ist, eine Vielzahl von zweiten Flächen auf einem Liniensegment festzulegen, das durch wenigstens einen Schnittpunkt (311,312) auf der wenigstens einen Linie (310) abgegrenzt ist, Informationen des interessierenden Objekts für jede der Vielzahl von zweiten Flächen (321-325) basierend zumindest teilweise auf den Ultraschalldaten für eine Scanlinie, die der jeweiligen zweiten Fläche (321-325) entspricht, zu erlangen, eine durchschnittliche Geschwindigkeit in jeder der Vielzahl von zweiten Flächen (321-325) basierend auf den jeweils erlangten Informationen zu dem interessierenden Objekt zu berechnen und den Bewegungsvektor für jede der Vielzahl von zweiten Flächen (321-325) basierend auf der jeweiligen durchschnittlichen Geschwindigkeit und dem Winkel des Rands zu bilden.

8. System nach Anspruch 7, wobei die Information des interessierenden Objekts eine Geschwindigkeit und eine Richtung der Bewegung des interessierenden Objekts beinhaltet.

## Revendications

1. Procédé de réalisation d'un vecteur de mouvement sur une image ultrasonique, comprenant:
l'acquisition d'un mode de brillance, d'un B-mode, d'une image d'un objet cible incluant un vaisseau sanguin (222), à travers lequel un objet mobile flotte ;
l'autorisation d'une région d'intérêt, ROI, d'être prise dans l'image B-mode, la ROI couvrant le vaisseau sanguin (222) dans l'objet cible ;
l'acquisition de données ultrasoniques pour une partie de l'objet cible correspondant à la ROI, les données ultrasoniques comportant des informations de vitesse de l'objet mobile ;
la formation d'une image en mode Doppler en couleurs (220) de la partie basée sur les données ultrasoniques ;
la détection d'un bord du vaisseau sanguin (222) basé sur l'image en mode Doppler en couleurs (220) :
la fixation d'au moins une ligne (310) perpendiculaire au bord ;
la détection d'au moins une intersection (311, 312) de ladite au moins une ligne (310) et du bord ;
la fixation d'une première zone incluant un nombre prédéterminé de pixels devant être centrés sur ladite au moins une intersection (311, 312) ;
le calcul d'un angle du bord à l'intersection (311, 312) basé sur les pixels correspondant au bord dans la première zone ; et
la formation d'un vecteur de mouvement de l'objet mobile basé sur les données ultrasoniques et sur l'angle du bord ;
la fixation du vecteur de mouvement sur l'image en couleurs en mode Doppler (220); et l'affichage de l'image en couleurs (220) en mode Doppler avec le vecteur de mouvement fixé.

2. Procédé selon la revendication 1, dans lequel le calcul d'un angle comprend le calcul de l'angle en utilisant un pixel plus à gauche et un pixel plus à droite parmi les pixels détectés.

3. Procédé selon la revendication 1, dans lequel la formation d'un vecteur de mouvement basé sur les données ultrasoniques et de l'angle comprend :
la fixation d'une pluralité de secondes zones (321-325) sur un segment de ligne déterminée par au moins une intersection (311, 312) sur ladite au moins une ligne (310) ;
l'obtention d'information d'un objet d'intérêt pour chacun de la pluralité des secondes zones (321-325) basé au moins en partie sur les données ultrasoniques pour une ligne de balayage qui correspond aux secondes zones respectives (321-325) ;
le calcul d'une vitesse moyenne dans chacune de la pluralité des secondes zones (321-325) basé sur l'information respectivement obtenue concernant l'objet d'intérêt ;
la formation du vecteur de mouvement pour chacun de la pluralité des secondes zones (321-325) basé sur la vitesse moyenne respective et l'angle du bord.

4. Procédé selon la revendication 3, dans lequel l'information concernant l'objet d'intérêt comprend la vitesse et la direction du mouvement de l'objet d'intérêt.

5. Système de détermination d'un vecteur de mouvement d'une image ultrasonique, comportant :
une unité d'acquisition d'une image configurée pour acquérir un mode de brillance, un B-mode, une image d'un objet cible incluant un vaisseau sanguin (222), à travers lequel un objet mobile flotte ;
une unité de réglage de région configurée pour permettre à une région d'intérêt, ROI, d'être placée dans l'image en B-mode, la ROI couvrant le vaisseau sanguin (222) dans l'objet cible ;
une unité d'acquisition (110) de données ultrasoniques configurée pour acquérir une partie d'un objet cible correspondant au ROI, les données ultrasoniques comportant des informations de vitesse de l'objet mobile ;
une unité de formation d'une image (120), configurée pour former une image en mode Doppler en couleurs (220), de la partie basée sur les données ultrasoniques ;
un processeur (130) configuré pour détecter un bord du vaisseau sanguin (222) basé sur l'image en mode Doppler en couleurs (220), fixer au moins une ligne (310) perpendiculaire au bord, détecter au moins une intersection (311, 312) de ladite au moins une ligne (310) et du bord,
fixer une première zone incluant un nombre prédéterminé de pixels devant être centrés sur ladite au moins une intersection, calculer un angle du bord à l'intersection (311, 312) basé sur les pixels correspondant au bord dans la première zone et l'angle du bord, former un vecteur de mouvement de l'objet mobile basé sur les données ultrasoniques et l'angle du bord,
et fixer le vecteur de mouvement sur l'image en couleurs en mode Doppler (220) ; et une unité (140) d'affichage configurée pour afficher l'image en couleurs (220) en mode Doppler avec le vecteur de mouvement fixé.

6. Système selon la revendication 5, dans lequel le processeur (130) est configuré pour calculer l'angle en utilisant un pixel plus à gauche et un pixel plus à droite parmi les pixels détectés.

7. Système selon la revendication 5, dans lequel processeur (130) est configuré pour déterminer une pluralité de secondes zones (321-325) sur un segment de ligne démarquée par au moins une intersection (311, 312) sur ladite au moins une ligne (310), pour obtenir une information d'un objet d'intérêt pour chacune de ladite pluralité de secondes zones (321-325), basé sur au moins une partie des données ultrasoniques pour une ligne de balayage correspondant à la seconde zone respective (321-325), calculer une vitesse moyenne dans chacune de la pluralité des secondes zones (321-325), basée sur les informations d'objet d'intérêt respectives obtenues, et former le vecteur de mouvement pour chacune de la pluralité des secondes zones (321-325) basés sur la vitesse moyenne respective et l'angle du bord.

8. Système selon la revendication 7, dans lequel l'information relative à l'objet d'intérêt comporte une vitesse et une direction de mouvement de l'objet d'intérêt.
